# EUROPEAN PATENT APPLICATION

(11) **EP 4 358 175 A1**
(43) Date of publication of application: **24.04.2024**
(21) Application number: 22949673.2
(22) Date of filing: 03.08.2022
(51) Int. Cl.: H01M 4/13, H01M 4/48

(54) **NEGATIVE ELECTRODE SHEET AND PREPARATION METHOD THEREFOR, SECONDARY BATTERY, BATTERY MODULE, BATTERY PACK, AND ELECTRICAL APPARATUS**

(71) Applicant: Contemporary Amperex Technology Co., Limited, Ningde, Fujian 352100 (CN)
(72) Inventor: WU, Qifan, Ningde, Fujian 352100 (CN); ZHANG, Ming, Ningde, Fujian 352100 (CN); ZHOU, Yi, Ningde, Fujian 352100 (CN)
(74) Representative: Gong, Jinping
(86) International application number: PCT/CN2022/109830
(87) International publication number: WO 2024/026702

(57) **Abstract**

The present application provides an anode plate, which includes a current collector and an anode active material layer. The anode active material layer is disposed on at least one surface of the current collector. The anode active material layer includes a fluoropolymer and a carbon nanotube; the fluoropolymer is dispersed in the anode active material layer; and the carbon nanotube is wrapped around the fluoropolymer and an anode active material in the anode active material layer.

## Description

### TECHNICAL FIELD

The present application relates to the technical field of secondary batteries, and in particular, to an anode plate and a preparation method thereof, a secondary battery, a battery module, a battery pack and an electric device.

### BACKGROUND

There is a common demand for secondary batteries with excellent low-temperature performance and cycle life for electric vehicles and consumer electronics in the market. Conventional methods mainly improve the low-temperature performance or cycle life of secondary batteries by means of size control of active material particles, surface modification, and electrolyte system optimization. However, it is difficult to achieve good low-temperature performance and long cycle life at the same time.

### SUMMARY

In view of the technical problems, the present application provides an anode plate and a preparation method thereof, a secondary battery, a battery module, a battery pack and an electric device, capable of improving the low-temperature performance and cycle life of the secondary battery.

An aspect of the present application provides an anode plate, including:
a current collector; and
an anode active material layer disposed on at least one surface of the current collector; the anode active material layer includes a fluoropolymer and a carbon nanotube;
the fluoropolymer is dispersed in the anode active material layer; the carbon nanotube is wrapped around the fluoropolymer and the anode active material in the anode active material layer.

In some of the embodiments, the fluoropolymer includes at least one of a homopolymer of a monomer represented by Formula I and a copolymer of a monomer represented by Formula I and a monomer represented by Formula II: 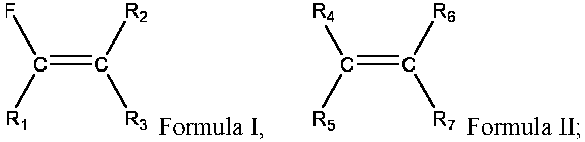
where Ri to R₇ are each independently selected from -H, -F, -Cl, -COOH, -COOR, -CHO, -COR, -CONH₂, -CONHR, -CN, -CCl₃, -CF₃, -NO₂, -OH, -OR, -R and -ROR; optionally, Rito R₇ are each independently selected from -H, -F, -Cl, -COOH and -COOR;
R is selected from C₁ -C₁₈ straight chain or branched chain alkyl; optionally, R is selected from C₁ -C₁₅ straight chain or branched chain alkyl; optionally, R is selected from C₁₋C₁₀ straight chain or branched chain alkyl.

In some of the embodiments, the fluoropolymer is at least one selected from polyvinylidene fluoride, polytetrafluoroethylene, hexafluoropropylene, a vinylidene fluoride-tetrafluoroethylene copolymer, a vinylidene fluoride-hexafluoropropylene copolymer, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluoroacrylate resin;
optionally, the fluoropolymer is at least one selected from polyvinylidene fluoride, a vinylidene fluoride-tetrafluoroethylene copolymer, a vinylidene fluoride-hexafluoropropylene copolymer and a vinylidene fluoride-hexafluoropropylene-tetrafluoroethylene terpolymer.

In some of the embodiments, a relative molecular mass of the fluoropolymer is 0.1 million-3 million; optionally, the relative molecular mass of the fluoropolymer is 0.2 million-2 million.

In some of the embodiments, the fluoropolymer is a spherical particle.

In some of the embodiments, a diameter of the spherical particle is 50 nm-500 nm; optionally, the diameter of the spherical particle is 100 nm-200 nm.

In some of the embodiments, the carbon nanotube is at least one selected from a single-walled carbon nanotube and a multi-walled carbon nanotube.

In some of the embodiments, a diameter of the carbon nanotube is 0.5 nm-20 nm.

In some embodiments, an aspect ratio of the carbon nanotube is 50-20,000; optionally, the aspect ratio of the carbon nanotube is 60-10,000.

In some of the embodiments, in the anode active material layer, a mass percentage of the fluoropolymer is 0.01%-10%; optionally, the mass percentage of the fluoropolymer is 0.1%-5%.

In some of the embodiments, in the anode active material layer, a mass percentage of the carbon nanotube is 0.01%-5%; optionally, the mass percentage of the carbon nanotube is 0.2%-2%.

In some of the embodiments, a mass percentage of the anode active material in the anode active material layer is 86%-97%.

In some of the embodiments, the anode active material layer also includes a conductive agent;
optionally, in the anode active material layer, a mass percentage of the conductive agent is no more than 3%.

In some of the embodiments, the anode active material layer also includes a binder;
optionally, in the anode active material layer, a mass percentage of the binder is 0.5%-3%.

In a second aspect, the present application further provides a method for preparing an anode plate, including the following steps:
preparing an anode slurry, which contains a fluoropolymer and a carbon nanotube;
coating the anode slurry on at least one surface of a current collector, drying, and cold pressing to obtain an anode plate;
the anode plate includes a current collector and an anode active material layer disposed on at least one surface of the current collector; the anode active material layer includes a fluoropolymer and a carbon nanotube; the fluoropolymer is dispersed in the anode active material layer; and the carbon nanotube is wrapped around the fluoropolymer and the anode active material in the anode active material layer.

In some of the embodiments, the fluoropolymer is prepared by emulsion polymerization.

In some of the embodiments, the fluoropolymer is an aqueous emulsion.

In some of the embodiments, the fluoropolymer is dispersed in the anode active material layer; and the carbon nanotube is wrapped around the fluoropolymer and the anode active material in the anode active material layer.

In some of the embodiments, the fluoropolymer includes at least one of a homopolymer of a monomer represented by Formula I and a copolymer of a monomer represented by Formula I and a monomer represented by Formula II: 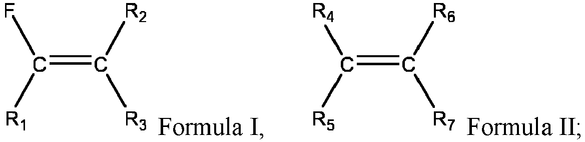
where R₁ to R₇ are each independently selected from -H, -F, -Cl, -COOH, -COOR, -CHO, -COR, -CONH₂, -CONHR, -CN, -CCl₃, -CF₃, -NO₂, -OH, -OR, -R and -ROR; optionally, R₁ to R₇ are each independently selected from -H, -F, -Cl, -COOH and -COOR;
R is selected from C₁ -C₁₈ straight chain or branched chain alkyl; optionally, R is selected from C₁-C₁₅ straight chain or branched chain alkyl; optionally, R is selected from C₁₋C₁₀ straight chain or branched chain alkyl.

In some of the embodiments, the fluoropolymer is at least one selected from polyvinylidene fluoride, polytetrafluoroethylene, hexafluoropropylene, a vinylidene fluoride-tetrafluoroethylene copolymer, a vinylidene fluoride-hexafluoropropylene copolymer, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluoroacrylate resin;
optionally, the fluoropolymer is at least one selected from polyvinylidene fluoride, a vinylidene fluoride-tetrafluoroethylene copolymer, a vinylidene fluoride-hexafluoropropylene copolymer and a vinylidene fluoride-hexafluoropropylene-tetrafluoroethylene terpolymer.

In some of the embodiments, a relative molecular mass of the fluoropolymer is 0.1 million-3 million; optionally, the relative molecular mass of the fluoropolymer is 0.2 million-2 million.

In some of the embodiments, the fluoropolymer is a spherical particle.

In some of the embodiments, a diameter of the spherical particle is 50 nm-500 nm; optionally, the diameter of the spherical particle is 100 nm-200 nm.

In some of the embodiments, the carbon nanotube is at least one selected from a single-walled carbon nanotube and a multi-walled carbon nanotube.

In some of the embodiments, a diameter of the carbon nanotube is 0.5 nm-20 nm.

In some embodiments, an aspect ratio of the carbon nanotube is 50-30,000; optionally, the aspect ratio of the carbon nanotube is 60-10,000.

In some of the embodiments, in the anode active material layer, a mass percentage of the fluoropolymer is 0.01%-10%; optionally, the mass percentage of the fluoropolymer is 0.1%-5%.

In some of the embodiments, in the anode active material layer, a mass percentage of the carbon nanotube is 0.01%-5%; optionally, the mass percentage of the carbon nanotube is 0.2%-2%.

In some of the embodiments, a mass percentage of the anode active material in the anode active material layer is 86%-97%.

In some of the embodiments, the anode active material layer also includes a conductive agent;
optionally, in the anode active material layer, a mass percentage of the conductive agent is no more than 3%.

In some of the embodiments, the anode active material layer also includes a binder;
optionally, in the anode active material layer, a mass percentage of the binder is 0.5%-3%.

In a third aspect, the present application further provides a secondary battery, including the above-mentioned anode plate or an anode pate prepared by the above-mentioned preparation method for an anode pate.

In a fourth aspect, the present application further provides a battery module, including the above-mentioned secondary battery.

In a fifth aspect, the present application further provides a battery pack, including the above-mentioned battery module.

In a sixth aspect, the present application further provides an electric device, including at least one selected from the above-mentioned secondary battery, the above-mentioned battery module, or the above-mentioned battery pack.

In the anode pate of the present application, the anode active material layer includes a fluoropolymer and a carbon nanotube, and the carbon nanotube is wrapped around the fluoropolymer and the anode active material, the carbon nanotube and the fluoropolymer help to form a stable solid electrolyte interface film on the surface of the anode plate, thereby improving the low-temperature impedance and cycle stability of the secondary battery; at the same time, the carbon nanotube is beneficial to inhibit the cycling expansion of the anode pate, which further improves the low-temperature performance and cycle life of the secondary battery.

The details of one or more embodiments of the present application are set forth in the accompanying drawings and the description below, and other features, objects, and advantages of the present application will become apparent from the specification, drawings, and claims.

### BRIEF DESCRIPTION OF THE DRAWINGS

FIG. 1 is a schematic diagram of a secondary battery according to an embodiment of the present application;
FIG. 2 is an exploded view of the secondary battery according to the embodiment of the present application shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded view of the battery pack according to the embodiment of the present application shown in FIG. 4; and
FIG. 6 is a schematic diagram of an electric device in which a secondary battery is used as a power source according to an embodiment of the present application.

### Reference numbers in the drawings are as follows:

1 battery pack; 2 upper container body; 3 lower container body; 4 battery module; 5 secondary battery; 51 casing; 52 electrode assembly; 53 cover plate; and 6 electric device.

In order to better describe and illustrate embodiments and/or examples of the inventions disclosed herein, reference is made to one or more of the accompanying drawings. Additional details or examples used to describe the drawings should not be construed as limitations on the scope of any of the disclosed inventions, the embodiments presently described and/or examples, and the best mode of these inventions currently understood.

### DETAILED DESCRIPTION OF THE EMBODIMENTS

In order to facilitate understanding of the present application, the application will be described more comprehensively below with reference to the relevant accompanying drawings. Preferred embodiments of the present application are illustrated in the accompanying drawings. However, the present application may be realized in many different forms and is not limited to the embodiments described herein. Rather, these embodiments are provided to enable a more thorough and comprehensive understanding of the disclosure of the present application.

Unless otherwise defined, all technical and scientific terms used herein have the same meaning as commonly understood by one of ordinary skill in the technical field to which this application belongs. The terms used herein in the specification of the present application are only for the purpose of describing specific embodiments, and are not intended to limit the present application. As used herein, the term "and/or" includes any and all combinations of one or more of the associated listed items.

For secondary batteries in electric vehicles and consumer electronics, both excellent low-temperature characteristics and cycle life have been the pursuit of end customers. However, it is usually difficult to improve both the low-temperature performance and the cycle life of the secondary battery in conventional technologies. Typically, secondary batteries will deteriorate and lithium (sodium) will deposit at low temperatures, affecting the low-temperature performance of the secondary battery on the one hand, and decreasing the cycle life due to a large loss of active ions on the other.

After extensive research, the inventors of the present application found that by adding fluoropolymers and carbon nanotubes to the anode active material layer, under the combined effect of fluoropolymers and carbon nanotubes, the surface of the anode plate can form a stable and tough solid electrolyte interface (SEI) film, thereby reducing the low-temperature impedance of the secondary battery, and the SEI film on the surface of the anode plate is resistant to piercing by the deposited lithium, and the cycle performance of the secondary battery is better.

The present application provides an anode plate, a secondary battery using the anode plate, a battery module, a battery pack, and an electric device. The secondary battery is suitable for a variety of electric devices that use batteries, such as mobile phones, portable devices, laptops, battery cars, electric toys, electric tools, electric vehicles, ships and spacecraft, etc., for example, spacecraft including airplanes, rockets, space shuttles and spaceships, and the like.

An embodiment of the present application provides an anode plate, including a current collector and an anode active material layer. The anode active material layer is disposed on at least one surface of the current collector. The anode active material layer includes a fluoropolymer and a carbon nanotube (CNT). The fluoropolymer is dispersed in the anode active material layer. The carbon nanotube is wrapped around the fluoropolymer and anode active material. In the anode plate of the present application, the anode active material layer includes a fluoropolymer and a carbon nanotube, and the carbon nanotube and fluoropolymer facilitate the formation of a dense and tough fluorine (F)-containing solid electrolyte interface (SEI) film layer on the surface of the anode plate during the formation of the secondary battery, thereby improving the low-temperature resistance and cycle stability of the secondary battery; at the same time, the carbon nanotube aids to inhibiting the cycling expansion of the anode plate, and further improving the low-temperature performance and cycle life of the secondary battery.

Carbon nanotubes have relatively good mechanical properties. In the anode active material layer, the carbon nanotube wraps around the fluoropolymer and the anode active material, so the expansion of the anode plate can be effectively hindered, and the deterioration of the anode plate can be avoided. Under the combined effect of the carbon nanotube and fluoropolymer, a fluorine-containing SEI film with higher toughness can be formed on the surface of the anode plate. The SEI film has better stability and is conducive to improving the low-temperature resistance and cycle life of the anode plate.

As an example, the anode current collector has two opposing surfaces in the thickness direction thereof, and the anode active material layer is disposed on any one or both of the two opposing surfaces of the anode current collector.

In some of the embodiments, the anode current collector may be a metal foil or a composite current collector. For example, the metal foil may be a copper foil. The composite current collector may include a polymer base layer and a metal layer formed on at least one surface of the polymer substrate. The composite current collector may be formed by forming the metal material (copper, copper alloys, nickel, nickel alloys, titanium, titanium alloys, silver and silver alloys, etc.) on the polymer substrate (such as polypropylene (PP), polyethylene terephthalate (PET), polybutylene terephthalate (PBT), polystyrene (PS), polyethylene (PE) and the like).

As an example, the anode active material layer of the anode plate may be imaged through scanning electron microscope-EDS energy spectrum analysis (SEM-EDS), according to GB/T 17359-2012 "Quantitative Analysis of Microbeam Analysis Energy Spectroscopy", and the morphology characteristics of the anode active material layer and the characteristic element distribution of the fluoropolymer and carbon nanotubes.

In some of the embodiments, the fluoropolymer is prepared by emulsion polymerization. The fluoropolymer prepared by emulsion polymerization has better dispersibility, which is beneficial to the preparation of the anode plate.

In some of the embodiments, the preparation of the fluoropolymer includes the steps of: [0080] mixing deionized water, an initiator and an emulsifier under protective atmosphere, then adding a monomer to carry out an emulsion polymerization, and after the reaction is completed, collecting the polymer emulsion.

In some of the embodiments, the emulsifier includes at least one of sodium perfluorooctanoate, ammonium perfluorooctanoate, ammonium perfluorononanoate, a perfluoro- or partially fluorinated alkyl carboxylic acid, a perfluoro or partially fluorinated monoalkyl phosphate, a perfluoro or partially fluorinated alkyl ether and a polyether carboxylic acid.

In some of the embodiments, the initiator includes at least one of dimethyl peroxydicarbonate, diethyl peroxydicarbonate, diisopropyl peroxydicarbonate (IPP), diisobutyl peroxydicarbonate, ammonium persulfate, potassium persulfate, tert-butyl hydroperoxide, β-hydroxyethyl tert-butyl peroxide, β-hydroxypropyl tert-butyl peroxide, β-hydroxyisopropyl tert-butyl peroxide, β-hydroxybutyl tert-butyl peroxide, β-hydroxyisobutyl tert-butyl peroxide and benzoyl peroxide.

In some of the embodiments, the fluoropolymer includes at least one of a homopolymer of a monomer represented by Formula I and a copolymer of a monomer represented by Formula I and a monomer represented by Formula II: 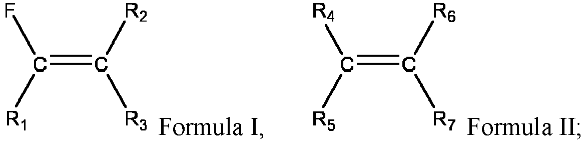
where Rito R₇ are each independently selected from -H, -F, -Cl, -COOH, -COOR, -CHO, -COR, -CONH₂, -CONHR, -CN, -CCl₃, -CF₃, -NO₂, -OH, -OR, -R and -ROR. Further, R₁ to R₇ are each independently selected from -H, -F, -Cl, -COOH and -COOR.
R is selected from C₁ -C₁₈ straight chain or branched chain alkyl. Optionally, R is selected from C₁-C₁₅ straight chain or branched chain alkyl. Optionally, R is selected from C₁₋C₁₀ straight chain or branched chain alkyl.

In some of the embodiments, the fluoropolymer is at least one selected from polyvinylidene fluoride, polytetrafluoroethylene, hexafluoropropylene, a vinylidene fluoride-tetrafluoroethylene copolymer, a vinylidene fluoride-hexafluoropropylene copolymer, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluoroacrylate resin. Further, the fluoropolymer is at least one selected from polyvinylidene fluoride, a vinylidene fluoride-tetrafluoroethylene copolymer, a vinylidene fluoride-hexafluoropropylene copolymer and a vinylidene fluoride-hexafluoropropylene-tetrafluoroethylene terpolymer.

In some of the embodiments, the relative molecular mass of the fluoropolymer is 0.1 million-3 million. When the molecular mass of the fluoropolymer is within the above range, the relative molecular mass can be more accurately controlled in the preparation process, so that the relative molecular mass distribution of the fluoropolymer is uniform, and the uniformity of the anode plate is good; at the same time, an SEI film can formed on the surface of the anode plate to improve the low-temperature performance and cycle life of the secondary battery. Optionally, the relative molecular mass of the fluoropolymer may be in the range defined by any combination of two of the following values: 0.1 million, 0.2 million, 0.5 million, 0.8 million, 1 million, 1.5 million, 2 million, 2.5 million or 3 million. Further, the relative molecular mass of the fluoropolymer is 0.2 million-2 million.

As an example, the relative molecular mass of fluoropolymers is measured by gel permeation chromatography (GPC) with a test instrument of waters e2695. The polymer molecules pass through a chromatographic column filled with special porosity, and are separated on the chromatographic column according to the size of the molecules. The ones with large molecular volume (molecular mass) flow out first, and the small ones flow out subsequently due to their long dwelling on the column. The effluent is detected, and parameters such as molecular mass and molecular mass distribution of the measured molecules are automatically calculated to obtain the GPC chromatogram. The relative molecular mass and molecular mass distribution of the sample to be tested can be calculated from the standard curve obtained from the standard sample of molecular mass through the chromatogram. The test process is as follows: with automatic sampling, the injection volume is 30-100 uL, the flow rate is 1 mL/min, the analytical column is Styragel HT5 DMF 7.8×300 mm, the standard is polystyrene, and the testing time can be adjusted according to the actual peak conditions.

In some of the embodiments, the fluoropolymer is a spherical particle. The fluoropolymer as a spherical particle is beneficial to maintaining stability during the preparation process, thereby improving the uniformity of the anode plate. In some of the embodiments, the spherical particle has a diameter of 50 nm-500 nm. When the diameter of the spherical particle is within the above range, the preparation process is easier to conduct; and the stability of the anode slurry and the uniformity of the anode plate are not affected, and the electrical performance is good. Optionally, the diameter of spherical particle may be in a range defined by any combination of two of the following values: 50 nm, 100 nm, 150 nm, 200 nm, 250 nm, 300 nm, 350 nm, 400 nm, 450 nm or 500 nm. Further, the spherical particle has a diameter of 100 nm-200 nm.

In some of the embodiments, the carbon nanotube is at least one selected from a single-walled carbon nanotube and a multi-walled carbon nanotube.

In some of the embodiments, the diameter of carbon nanotube is 0.5 nm-20 nm. Optionally, the diameter of carbon nanotubes is 0.5 nm, 1 nm, 5 nm, 10 nm, 15 nm or 20 nm. Further, the diameter of carbon nanotubes is 0.5 nm-10 nm. The measurement method of the diameter of the carbon nanotube tube is by means of transmission electron microscope, in which the diameters of carbon nanotube bundles in a range of 20 µm×20 µm are measured, and the width of carbon nanotube bundle is taken at three different positions of each bundle, which is recorded as the diameter of the carbon nanotube bundle, an average value of the diameters of all the carbon nanotube bundles in the area is taken as the measured diameter of the carbon nanotube.

In some of the embodiments, the aspect ratio of carbon nanotube is 50-20000. A carbon nanotube with an aspect ratio within the above range is able to wrap the anode active material and the fluoropolymer better, and the performance of the anode plate is better. Optionally, the aspect ratio of carbon nanotube may be in a range defined by any combination of two of the following values: 50, 60, 100, 500, 1000, 5000, 10000, and 20000. Further, the aspect ratio of carbon nanotube is 60-10000. The aspect ratio is the ratio of the length of the carbon nanotube to the diameter thereof, which can be calculated from the measured length and diameter of the carbon nanotube. The test method for the length of the carbon nanotube is: by using a transmission electron microscope, the length of carbon nanotube bundles within a range of 20 µm×20 µm is measured, and the average length of all carbon nanotube bundles in this area is taken as the measured length of carbon nanotubes.

In some of the embodiments, in the anode active material layer, the mass percentage of fluoropolymer is 0.01%-10%. The content of the fluoropolymer within the above range is conducive to the formation of a stable fluorine-containing SEI film, and this will not increase the internal impedance of the anode plate and cause deterioration of the electrochemical performance. Optionally, the mass percentage of fluoropolymer may be a range defined by any combination of two of the following values: 0.01%, 0.1%, 1%, 2%, 4%, 5%, 6%, 8% or 10%. Further, the mass percentage of fluoropolymer is 0.1%-5%.

In some of the embodiments, in the anode active material layer, the mass percentage of carbon nanotube is 0.01%-5%. When the content of carbon nanotube is within the above range, the cycling expansion rate of the anode plate will not be too high; and the occurrence of agglomeration is reduced during the preparation process, which is beneficial to the uniformity of the preparation of the anode plate. Optionally, the mass percentage of carbon nanotube may be a range defined by any combination of two of the following values: 0.01%, 0.1%, 0.2%, 0.4%, 0.5%, 1%, 2%, 3%, 4% or 5%. Further, the mass percentage of carbon nanotube is 0.2%-2%.

In some of the embodiments, in the anode active material, the mass percentage of fluoropolymer is 0.1%-5%, and the mass percentage of carbon nanotubes is 0.2%-2%.

In some of the embodiments, the anode active material may be an anode active material known in the art for batteries. As an example, the anode active material may include at least one of the following materials: artificial graphite, natural graphite, soft carbon, hard carbon, silicon-based material, tin-based material, lithium titanate, and the like. The silicon-based material may be at least one selected from monolithic silicon, silicon-oxygen compounds, silicon-carbon compounds, silicon-nitrogen compounds, and silicon alloys. The tin-based material may be at least one selected from metal tin, tin oxide, and tin alloy. However, the present application is not limited to these materials, and other conventional materials that can be used as the anode active material of batteries can also be used. These anode active materials may be used alone or in combination of two or more.

In some of the embodiments, in the anode active material layer, the mass percentage of the anode active material is 86%-97%.

In some of the embodiments, the anode active material layer optionally further includes a conductive agent. The conductive agent may be at least one selected from superconducting carbon, acetylene black, carbon black, Ketjen black, carbon dots, graphene and carbon nanofibers. In some of the embodiments, in the anode active material layer, the mass percentage of the conductive agent is no more than 3%.

In some of the embodiments, the anode active material layer may optionally further include a binder. The binder may be at least one selected from styrene-butadiene rubber (SBR), polyacrylic acid (PAA), sodium polyacrylate (PAAS), polyacrylamide (PAM), poly(vinyl alcohol) (PVA), sodium alginate (SA), polymethacrylic acid (PMAA) and carboxymethyl chitosan (CMCS). In some of the embodiments, in the anode active material layer, the mass percentage of the binder is 0.5%-3%.

In some of the embodiments, the anode active material layer may optionally include another additive, such as a thickener (for example, sodium carboxymethylcellulose (CMC-Na)) and the like.

Another embodiment of the present application further provides a preparation method for an anode plate, including the following steps S1 10-S 120.

Step S110: preparing an anode slurry, which contains a fluoropolymer and a carbon nanotube.

Step S120: coating the anode slurry on at least one surface of a current collector, drying, and cold pressing to obtain an anode plate.

Preparing an anode slurry, which contains a fluoropolymer and a carbon nanotube;
the anode plate includes a current collector and an anode active material layer disposed on at least one surface of the current collector; the anode active material layer includes a fluoropolymer and a carbon nanotube; the fluoropolymer is dispersed in the anode active material layer; and the carbon nanotube is wrapped around the fluoropolymer and the anode active material in the anode active material layer.

In some of the embodiments, in Step S110, the fluoropolymer is an aqueous emulsion. The fluoropolymer in the form of an aqueous emulsion used as the raw material for preparation allows better compatibility in the anode slurry and is beneficial to the preparation of the anode plate.

In some of the embodiments, in Step S 110, preparing the anode slurry includes: dispersing the above-mentioned components for preparing an anode plate, such as the anode active material, the conductive agent, the binder and the carbon nanotube, in a solvent (such as deionized water), adding the emulsion of the fluoropolymer, and mixing to form the anode slurry.

In addition, the secondary battery, the battery module, the battery pack, and the electric device of the present application are described below with due reference to the accompanying drawings.

In one embodiment of the present application, a secondary battery is provided.

Typically, a secondary battery includes a cathode plate, an anode plate, an electrolyte and a separator. During the charging and discharging process of the battery, active ions are intercalated and deintercalated back and forth between the cathode plate and the anode plate. The electrolyte acts as a conductor of ions between the cathode plate and the anode plate. The separator is disposed between the cathode plate and the anode plate to provide isolation while allowing ions to pass through.

### Anode plate

The anode plate in the above first aspect is adopted.

### Cathode plate

The cathode plate generally includes a cathode current collector and a cathode film layer disposed on the cathode current collector, the cathode film layer includes a cathode active material.

As an example, the cathode current collector has two opposing surfaces in the thickness direction thereof, and the cathode film layer is disposed on any one or both of the two opposing surfaces of the cathode current collector.

In some of the embodiments, the cathode current collector may utilize a metal foil or a composite current collector. For example, an aluminum foil may be used as the metal foil. The composite current collector may include a polymer base layer and a metal layer formed on at least one surface of the polymer base layer. The composite current collector may be formed by forming a metal material (aluminum, aluminum alloys, nickel, nickel alloys, titanium, titanium alloys, silver and silver alloys, etc.) on a polymer substrate (such as polypropylene (PP), polyethylene terephthalate (PET), polybutylene terephthalate (PBT), polystyrene (PS), polyethylene (PE) and the like).

In some of the embodiments, the cathode active material may be a cathode active material known in the art for batteries. As an example, the cathode active material may include at least one of the following materials: olivine lithium-containing phosphate, a lithium transition metal oxide, and respective modified compounds thereof. However, the present application is not limited to these materials, and other conventional materials that can be used as cathode active materials of batteries may also be used. These cathode active materials may be used alone or in combination of two or more. Examples of lithium transition metal oxide may include, but not limited to, at least one of a lithium cobalt oxide (such as LiCoO₂), a lithium nickel oxide (such as LiNiO₂), a lithium manganese oxide (such as LiMnO₂, LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁), a lithium nickel cobalt aluminum oxide (such as LiNi_{0.85}Co_{0.15}Al_{0.05}O₂) and their modified compounds, etc. An example of olivine lithium-containing phosphates may include, but is not limited to, at least one of lithium iron phosphate (such as LiFePO₄ (also abbreviated as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some of the embodiments, the cathode active material layer optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluoroacrylate resin.

In some of the embodiments, the cathode active material layer optionally includes a conductive agent. As an example, the conductive agent may include at least one of superconducting carbon, acetylene black, carbon black, Ketjen black, a carbon dot, a carbon nanotube, graphene, and carbon nanofiber.

In some of the embodiments, the cathode plate may be prepared by the following method: dispersing the above-mentioned components for preparing the cathode plate, such as the cathode active material, the conductive agent, the binder and any other components, in a solvent (such as N-methylpyrrolidone) to form a cathode slurry; coating the cathode slurry on a cathode current collector, and carrying out drying, cold pressing and other processes to obtain the cathode plate.

### Electrolyte

The electrolyte is used for ion conduction between the cathode and the anode. The present application has no specific limitation on the type of electrolyte, which can be selected according to requirements. For example, the electrolyte may be liquid, gel or solid.

In some of the embodiments, the electrolyte is an electrolyte solution. The electrolyte solution includes an electrolyte salt and a solvent.

In some of the embodiments, the electrolyte salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxolato)phosphate.

In some of the embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, methyl ethyl sulfone, and diethyl sulfoxide.

In some embodiments, the electrolyte optionally includes an additive. For example, the additive may include an anode film-forming additive and a cathode film-forming additive, and may also include an additive that improves certain battery properties, such as an additive that improves battery overcharge performance, an additive that improves battery high-temperature performance, an additive that improves battery low-temperature performance, and the like.

### Separator

In some embodiments, the secondary battery also includes a separator. The type of separator in the present application is not particularly limited, and any well-known porous separators with good chemical stability and mechanical stability may be used.

In some embodiments, the separator may be made of at least one selected from glass fiber, non-woven fabrics, polyethylene, polypropylene, and polyvinylidene difluoride. The separator may be a single-layer film or a multi-layer composite film, with no particular limitations thereto. When the separator is a multi-layer composite film, the materials of the layers may be the same or different, with no particular limitations thereto.

In some embodiments, the cathode plate, the anode plate and the separator may form an electrode assembly by a winding process or a laminating process.

In some embodiments, the secondary battery may include an outer packaging. The outer packaging is used to encapsulate the above-mentioned electrode assembly and the electrolyte.

In some embodiments, the outer packaging of the secondary battery may be a hard case, such as a hard plastic case, an aluminum case, a steel case, and the like. The outer packaging of the secondary battery may also be a soft bag, such as a pouch-type soft bag. The material of the soft bag may be plastic, and examples of the plastic include polypropylene, polybutylene terephthalate, polybutylene succinate, and the like.

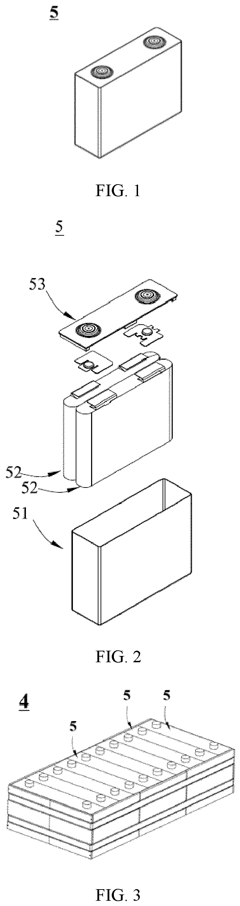

The shape of the secondary battery is not particularly limited in the present application and may be cylindrical, square, or any other shape. FIG. 1 is an exemplary secondary battery 5 with a square structure.

In some embodiments, referring to FIG. 2, the outer packaging may include a casing 51 and a cover plate 53. The casing 51 may include a bottom plate and side plates attached to the bottom plate, and the bottom plate and the side plates enclose an accommodating cavity. The casing 51 has an opening communicated with the accommodating cavity, and the cover plate 53 may cover the opening to close the accommodating cavity. The cathode plate, the anode plate and the separator may be wound or laminated to form an electrode assembly 52. The electrode assembly 52 is encapsulated in the accommodating cavity. The electrolyte is infiltrated into the electrode assembly 52. The number of the electrode assembly 52 in the secondary battery 5 may be one or multiple, which may be adjusted by those skilled in the art according to requirements.

In some embodiments, secondary batteries may be assembled into a battery module, and the number of the secondary batteries contained in the battery module may be one or multiple, and the specific number may be adjusted by those skilled in the art according to the application and capacity of the battery module.

FIG. 3 shows an exemplary battery module 4. Referring to FIG. 3, in the battery module 4, a plurality of secondary batteries 5 may be arranged sequentially along the length of the battery module 4. Of course, the secondary batteries may also be arranged in any other manner. Further, the plurality of secondary batteries 5 may be secured by fasteners.

Optionally, the battery module 4 may also include a housing having a receiving space for receiving a plurality of secondary batteries 5.

In some embodiments, the above battery module may also be assembled into a battery pack, where the number of the battery modules contained in the battery pack may be one or multiple, which may be adjusted by those skilled in the art according to the application and capacity of the battery pack.

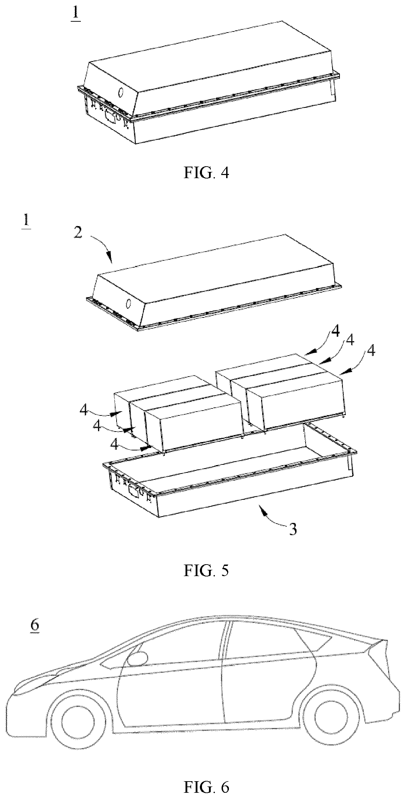

FIGS. 4 and 5 show an exemplary battery pack 1. Referring to FIGS. 4 and 5, The battery pack 1 includes a battery container and a plurality of battery modules 4 disposed in the battery container. The battery container includes an upper container body 2 and a lower container body 3, the upper container body 2 is able to cover the lower container body 3 and form an enclosed space for accommodating the battery modules 4. The plurality of battery modules 4 may be arranged in the battery container in any manner.

In addition, the present application also provides an electric device, the electric device includes at least one of the secondary battery, the battery module, or the battery pack. The secondary battery, the battery module, or the battery pack may be used as a power source for the device, or may serve as an energy storage unit for the device. The electric devices may include a mobile device, an electric vehicle, an electric train, a ship and a satellite, and an energy storage system, etc., but are not limited thereto. A mobile device may be a mobile phone, a laptop, etc.; An electric vehicle may be a pure electric vehicle, a hybrid electric vehicle, a plug-in hybrid electric vehicle, an electric bicycle, an electric scooter, an electric golf cart, an electric truck, etc., but not limited thereto.

The electric device may select a secondary battery, a battery module or a battery pack depending on the needs of the use thereof.

FIG. 6 shows an exemplary electric device 6. The electric device 6 is a pure electric vehicle, a hybrid electric vehicle, or a plug-in hybrid electric vehicle, etc. To satisfy the high power and high energy density requirements of the secondary battery for this device, a battery pack or a battery module may be used.

As another example, the device may be a cell phone, a tablet, a laptop, etc. The device normally requires compactness and lightness and may employ a secondary battery as a power source.

### Examples

Hereinafter, examples of the present application will be described. The examples described below are exemplary and are only used for explaining the present application, and should not be construed as limiting the present application. If no specific technique or condition is indicated in the examples, it shall be carried out according to the technique or condition described in the literature in the art or according to the product specification. The reagents or instruments used without indication of the manufacturer were all commercially available conventional products.

### Example 1

### Preparation of anode plate:

An anode active material (artificial graphite), a conductive agent (acetylene black), a dispersant (sodium carboxymethyl cellulose), a binder (styrene-butadiene rubber, SBR) and single-walled carbon nanotubes were dispersed in deionized water, and a fluoropolymer (PVDF) emulsion (fluoropolymer in the emulsion in the form of spherical particles) was added to obtain an anode slurry. The anode slurry was coated on a copper foil, followed by drying, cold pressing, and slitting to obtain an anode plate. The mass ratio of the anode active material, conductive agent, dispersant, binder, single-walled carbon nanotubes and fluoropolymer in the anode active material layer was 95:0.5:1:2:0.5:1.

### Preparation of cathode plate:

A cathode slurry was obtained by mixing and dispersing a cathode active material (NCM₅₂₃), a conductive agent (acetylene black), and a binder (PVDF) in NMP at a mass ratio of 96:2:2 and was coated on an aluminum foil, followed by drying, cold pressing, and slitting to obtain the cathode plate.

Separator: a PE porous polymer film was used as the separator.

### Electrolyte solution:

In an argon atmosphere glove box with a water content of < 10 ppm, equal volumes of ethylene carbonate (EC) and ethyl methyl carbonate (EMC) were mixed at a volume ratio of 3:7 to obtain an organic solvent, and 1 mol/L LiPF₆ was uniformly dissolved in the above organic solvent to obtain an electrolyte solution.

### Preparation of secondary battery:

The cathode plate, separator and anode plate were wound into a bare cell. After hot pressing, the bare cell was assembled with a top cover and a casing, and then the electrolyte was injected. After processes of formation, exhaust, sealing, testing, etc., a secondary battery was obtained.

### Examples 2 to 6:

The difference between Examples 2 to 6 and Example 1 was that the particle diameters of the fluoropolymers were different.

### Examples 7 to 12:

The difference between Example 7 and Example 1 was that the mass ratio of anode active material, conductive agent, dispersant, binder, single-walled carbon nanotubes and fluoropolymer in the anode active material layer was 95.995:0.5:1:2:0.5:0.005.

The difference between Example 8 and Example 1 was that the mass ratio of anode active material, conductive agent, dispersant, binder, single-walled carbon nanotubes and fluoropolymer in the anode active material layer was 95.99:0.5: 1:2:0.5:0.01.

The difference between Example 9 and Example 1 was that the mass ratio of anode active material, conductive agent, dispersant, binder, single-walled carbon nanotubes and fluoropolymer in the anode active material layer was 95.9:0.5: 1:2:0.5:0.1.

The difference between Example 10 and Example 1 was that the mass ratio of anode active material, conductive agent, dispersant, binder, single-walled carbon nanotubes and fluoropolymer in the anode active material layer was 91:0.5:1:2:0.5:5.

The difference between Example 11 and Example 1 was that the mass ratio of anode active material, conductive agent, dispersant, binder, single-walled carbon nanotubes and fluoropolymer in the anode active material layer was 86:0.5:1:2:0.5: 10.

The difference between Example 12 and Example 1 was that the mass ratio of anode active material, conductive agent, dispersant, binder, single-walled carbon nanotubes and fluoropolymer in the anode active material layer was 84:0.5: 1:2:0.5: 12.

### Examples 13 to 15

The difference between Examples 13 to 15 and Example 1 was that the types of fluoropolymers were different.

### Examples 16 to 18

The difference between Examples 16 to 18 and Example 1 was that the diameters of the single-walled carbon nanotubes were different.

### Examples 19 to 24

The difference between Examples 19 to 24 and Example 1 was that the aspect ratios of the single-walled carbon nanotubes were different.

### Examples 25 to 30

The difference between Example 25 and Example 1 was that the mass ratio of the anode active material, conductive agent, dispersant, binder, single-walled carbon nanotubes and fluoropolymer in the anode active material layer was 95.455:0.5:1:2:0.005:1.

The difference between Example 26 and Example 1 was that the mass ratio of the anode active material, conductive agent, dispersant, binder, single-walled carbon nanotubes and fluoropolymer in the anode active material layer was 95.45:0.5:1:2:0.01:1.

The difference between Example 27 and Example 1 was that the mass ratio of the anode active material, conductive agent, dispersant, binder, single-walled carbon nanotubes and fluoropolymer in the anode active material layer was 95.3:0.5:1:2:0.2:1.

The difference between Example 28 and Example 1 was that the mass ratio of the anode active material, conductive agent, dispersant, binder, single-walled carbon nanotubes and fluoropolymer in the anode active material layer was 94.5:0.5:1:2:1:1.

The difference between Example 29 and Example 1 was that the mass ratio of the anode active material, conductive agent, dispersant, binder, single-walled carbon nanotubes and fluoropolymer in the anode active material layer was 93.5:0.5:1:2:2:1.

The difference between Example 30 and Example 1 was that the mass ratio of the anode active material, conductive agent, dispersant, binder, single-walled carbon nanotubes and fluoropolymer in the anode active material layer was 90.5:0.5:1:2:5:1.

### Examples 31 to 34

The difference between Examples 31 to 34 and Example 1 was that the relative molecular mass of the fluoropolymer was different.

### Example 35

The difference between Example 35 and Example 1 was that the carbon nanotubes in Example 35 were multi-walled carbon nanotubes.

### Comparative Example 1:

The differences between Comparative Example 1 and Example 1 were that, the anode plate of Comparative Example 1 did not contain carbon nanotubes, and the content of the conductive agent acetylene black was increased. The mass ratio of the anode active material, conductive agent, dispersant, binder and fluoropolymer in the anode active material layer was 95:1:1:2:1.

### Comparative Example 2:

The differences between Comparative Example 2 and Example 1 were that, the anode plate of Comparative Example 2 did not contain the fluoropolymer, the content of the binder SBR was increased, and the mass ratio of the anode active material, conductive agent, dispersant, binder and fluoropolymer in the anode active material layer was 95:0.5:1:3:0.5.

### Comparative Example 3:

The differences between Comparative Example 3 and Example 1 were that, the anode plate of Comparative Example 3 did not contain the fluoropolymer and the carbon nanotubes. The contents of the binder SBR and the conductive agent acetylene black were increased. The mass ratio of the anode active material, conductive agent, dispersant and binder in the anode active material layer was 95:1:1:3.

**Table 1 The composition of the anode plates of Examples 1 to 34 and Comparative Examples 1 to 3.**

| No. | Fluoropolymer | | | | Carbon nanotube | | |
|---|---|---|---|---|---|---|---|
| | Type | Relative molecular mass | Particle diameter (nm) | Content (wt%) | Diameter (nm) | Aspect ratio | Content (wt%) |
| Example 1 | PVDF | 0.5 million | 120 | 1 | 2 | 2500 | 0.5 |
| Example 2 | PVDF | 0.5 million | 50 | 1 | 2 | 2500 | 0.5 |
| Example 3 | PVDF | 0.5 million | 100 | 1 | 2 | 2500 | 0.5 |
| Example 4 | PVDF | 0.5 million | 200 | 1 | 2 | 2500 | 0.5 |
| Example 5 | PVDF | 0.5 million | 300 | 1 | 2 | 2500 | 0.5 |
| Example 6 | PVDF | 0.5 million | 500 | 1 | 2 | 2500 | 0.5 |
| Example 7 | PVDF | 0.5 million | 120 | 0.005 | 2 | 2500 | 0.5 |
| Example 8 | PVDF | 0.5 million | 120 | 0.01 | 2 | 2500 | 0.5 |
| Example 9 | PVDF | 0.5 million | 120 | 0.1 | 2 | 2500 | 0.5 |
| Example 10 | PVDF | 0.5 million | 120 | 5 | 2 | 2500 | 0.5 |
| Example 11 | PVDF | 0.5 million | 120 | 10 | 2 | 2500 | 0.5 |
| Example 12 | PVDF | 0.5 million | 120 | 12 | 2 | 2500 | 0.5 |
| Example 13 | PTFE | 0.5 million | 120 | 1 | 2 | 2500 | 0.5 |
| Example 14 | Vinylidene fluoride-hexafluoropropylene copolymer | 0.5 million | 120 | 1 | 2 | 2500 | 0.5 |
| Example 15 | Vinylidene fluoride-hexafluoropropylene-tetrafluoroethylene terpolymer | 0.5 million | 120 | 1 | 2 | 2500 | 0.5 |
| Example 16 | PVDF | 0.5 million | 120 | 1 | 0.5 | 2500 | 0.5 |
| Example 17 | PVDF | 0.5 million | 120 | 1 | 10 | 2500 | 0.5 |
| Example 18 | PVDF | 0.5 million | 120 | 1 | 20 | 2500 | 0.5 |
| Example 19 | PVDF | 0.5 million | 120 | 1 | 2 | 45 | 0.5 |
| Example 20 | PVDF | 0.5 million | 120 | 1 | 2 | 50 | 0.5 |
| Example 21 | PVDF | 0.5 million | 120 | 1 | 2 | 60 | 0.5 |
| Example 22 | PVDF | 0.5 million | 120 | 1 | 2 | 1000 | 0.5 |
| Example 23 | PVDF | 0.5 million | 120 | 1 | 2 | 10000 | 0.5 |
| Example 24 | PVDF | 0.5 million | 120 | 1 | 2 | 20000 | 0.5 |
| Example 25 | PVDF | 0.5 million | 120 | 1 | 2 | 2500 | 0.005 |
| Example 26 | PVDF | 0.5 million | 120 | 1 | 2 | 2500 | 0.01 |
| Example 27 | PVDF | 0.5 million | 120 | 1 | 2 | 2500 | 0.2 |
| Example 28 | PVDF | 0.5 million | 120 | 1 | 2 | 2500 | 0.5 |
| Example 29 | PVDF | 0.5 million | 120 | 1 | 2 | 2500 | 2 |
| Example 30 | PVDF | 0.5 million | 120 | 1 | 2 | 2500 | 5 |
| Example 31 | PVDF | 0.1 million | 120 | 1 | 2 | 2500 | 0.5 |
| Example 32 | PVDF | 0.2 million | 120 | 1 | 2 | 2500 | 0.5 |
| Example 33 | PVDF | 2 million | 120 | 1 | 2 | 2500 | 0.5 |
| Example 34 | PVDF | 3 million | 120 | 1 | 2 | 2500 | 0.5 |
| Comparative Example 1 | PVDF | 0.5 million | 120 | 1 | / | / | / |
| Comparative Example 2 | / | / | / | / | 2 | 2500 | 0.5 |
| Comparative Example 3 | / | / | / | / | / | / | / |

### Testing section:

### Low-temperature characteristic test of secondary batteries:

The actual capacity of the batteries was tested: after charging the batteries to 100% SOC (state of charge), the batteries were left to stand for 5 minutes after depolarization with a small current and then discharged to 0% SOC at 0.33 C, the obtained capacity was the capacity of the batteries. The direct current internal resistances (DCR) of the batteries at 50% SOC and 20% SOC at -25°C were tested: first, the battery cells were adjusted to 50% SOC at room temperature, placed at -25°C for 60 minutes, and then discharged at 0.33 C for 30 seconds; finally, the direct current resistance data of the batteries after 10 seconds was sorted out.

### Expansion performance test of anode plates under full-charge cycle at 45°C:

The thickness of the anode plate of the secondary battery after the cold pressing process was recorded as h0, and the secondary battery was cycled 100 times according to the above-mentioned method for the cycle performance test of the secondary battery at 45°C, and charged with a constant current at a rate of 1 C to a voltage of 4.25 V, and then charged at a constant voltage of 4.25 V until the current was less than or equal to 0.05 C, left to stand for 5 minutes, and the cell was fully charged at this point, then the cell after cycling was disassembled in a dry room, the thickness of the anode plate after 100 cycles was recorded as h100_{full charge}, the expansion rate of the anode plate of the secondary battery after 100 full-charge cycles at 5°C was Δh100_{fully charged} (%) = (h100_{full charge} - h0) / h0 * 100%.

### Cycle performance test:

At 45°C, the secondary batteries were charged to 4.25 V at a rate of 0.5 C, then charged at a constant voltage until the current was lower than 0.05 C, and then discharged to 2.8 V at a rate of 1 C, the cycle test was carried out in the form of full charge and discharge until the discharge capacity of the secondary batteries decayed to 80% of the initial capacity, and the number of cycles at this point was recorded.

**Table 2. The electrochemical performance of the secondary batteries of Examples 1 to 35 and Comparative Examples 1 to 3.**

| No. | Low temperature resistance (mΩ) | Cycling expansion rate of electrode plate (%) | Number of cycles |
|---|---|---|---|
| Example 1 | 200 | 24 | 2000 |
| Example 2 | 206 | 25 | 1900 |
| Example 3 | 204 | 25 | 1912 |
| Example 4 | 205 | 25 | 1880 |
| Example 5 | 206 | 25 | 1785 |
| Example 6 | 204 | 25 | 1687 |
| Example 7 | 298 | 26 | 1200 |
| Example 8 | 209 | 25 | 1677 |
| Example 9 | 208 | 25 | 1779 |
| Example 10 | 230 | 25 | 1786 |
| Example 11 | 265 | 25 | 1630 |
| Example 12 | 368 | 26 | 1104 |
| Example 13 | 207 | 24 | 1913 |
| Example 14 | 206 | 25 | 1924 |
| Example 15 | 211 | 25 | 1909 |
| Example 16 | 204 | 25 | 1988 |
| Example 17 | 208 | 26 | 1740 |
| Example 18 | 207 | 26 | 1690 |
| Example 19 | 220 | 29 | 1408 |
| Example 20 | 209 | 26 | 1712 |
| Example 21 | 208 | 26 | 1800 |
| Example 22 | 206 | 25 | 1984 |
| Example 23 | 207 | 25 | 1835 |
| Example 24 | 208 | 24 | 1988 |
| Example 25 | 231 | 29.6 | 1531 |
| Example 26 | 204 | 26 | 1605 |
| Example 27 | 206 | 25 | 1702 |
| Example 28 | 203 | 24 | 1900 |
| Example 29 | 205 | 24 | 1904 |
| Example 30 | 209 | 24 | 1946 |
| Example 31 | 208 | 25 | 1881 |
| Example 32 | 204 | 24 | 1993 |
| Example 33 | 207 | 25 | 1882 |
| Example 34 | 205 | 25 | 1886 |
| Example 35 | 224 | 26 | 1980 |
| Comparative Example 1 | 399 | 31 | 1100 |
| Comparative Example 2 | 414 | 29 | 1105 |
| Comparative Example 3 | 450 | 33 | 950 |

From the relevant data in Table 2, it can be found that in Examples 1-35, the low-temperature resistance of the secondary batteries is 200-368, the cycling expansion rate of the electrode plates is 24%-29.6%, and the number of cycles at which the discharge capacity decayed to 80% of the initial capacity is 1104-2000. In Comparative Examples 1-3, the low-temperature resistance of the secondary batteries is 399-450, the cycling expansion rate of electrode plates is 29%-33%, and the number of cycles at which the discharge capacity decayed to 80% of the initial capacity is 950-1105. Compared with the secondary battery in which the anode plate does not contain carbon nanotubes and fluoropolymers of Comparative Example 3, the secondary batteries of Examples 1 to 35 have lower low-temperature resistance and smaller cycling expansion rate of the electrode plate, and the cycle life of the secondary batteries is significantly increased.

Compared with Example 1, the anode plates of Comparative Examples 1 and 2 do not contain carbon nanotubes and fluoropolymer, respectively, and the low-temperature resistance of the secondary batteries in Comparative Examples 1 and 2 rises significantly, and the cycling expansion rate of the electrode plate increases. The cycle life of the secondary batteries of Comparative Examples 1 and 2 is significantly lower than that of the secondary batteries of Examples 1 to 35. This also shows that in the anode plate of the present application, the fluoropolymer and carbon nanotube have a synergistic effect to significantly improve the low-temperature resistance and cycle life of the secondary battery.

The technical features of the above-mentioned embodiments can be combined arbitrarily. For conciseness of the description, not all possible combinations of the technical features in the above-mentioned embodiments are described. However, as long as there is no contradiction in the combination of these technical features, all such combinations should be considered within the scope of the present disclosure.

The above-mentioned embodiments only represent several implementation modes of the present application, and the description thereof is relatively specific and detailed, but it should not be construed as limiting the scope of the present application. It should be noted that those skilled in the art can make several modifications and improvements without departing from the concept of the present application, and these all belong to the protection scope of the present application. Therefore, the scope of protection of the patent application should be based on the appended claims.

## Claims

1. An anode plate, comprising:
a current collector; and
an anode active material layer disposed on at least one surface of the current collector, the anode active material layer comprising a fluoropolymer and a carbon nanotube;
wherein the fluoropolymer is dispersed in the anode active material layer, and the carbon nanotube is wrapped around the fluoropolymer and an anode active material in the anode active material layer.

2. The anode plate according to claim 1, wherein the fluoropolymer comprises at least one of a homopolymer of a monomer represented by Formula I and a copolymer of a monomer represented by Formula I and a monomer represented by Formula II: 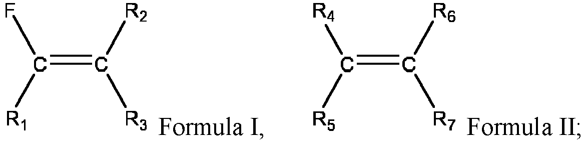
wherein R₁ to R₇ are each independently selected from -H, -F, -Cl, -COOH, -COOR, -CHO, -COR, -CONH₂, -CONHR, -CN, -CCl₃, -CF₃, -NO₂, -OH, -OR, -R and -ROR; optionally, R₁ to R₇ are each independently selected from -H, -F, -Cl, -COOH and -COOR; and
R is selected from C₁ -C₁₈ straight chain or branched chain alkyl; optionally, R is selected from C₁ -C₁₅ straight chain or branched chain alkyl; optionally, R is selected from C₁₋C₁₀ straight chain or branched chain alkyl.

3. The anode plate according to claim 1 or 2, wherein the fluoropolymer is at least one selected from polyvinylidene fluoride, polytetrafluoroethylene, hexafluoropropylene, a vinylidene fluoride-tetrafluoroethylene copolymer, a vinylidene fluoride-hexafluoropropylene copolymer, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluoroacrylate resin;
optionally, the fluoropolymer is at least one selected from polyvinylidene fluoride, polyvinylidene fluoride, a vinylidene fluoride-tetrafluoroethylene copolymer, a vinylidene fluoride-hexafluoropropylene copolymer and a vinylidene fluoride-hexafluoropropylene-tetrafluoroethylene terpolymer.

4. The anode plate according to any of claims 1 to 3, wherein a relative molecular mass of the fluoropolymer is 0.1 million-3 million; optionally, the relative molecular mass of the fluoropolymer is 0.2 million-2 million.

5. The anode plate according to any of claims 1 to 4, wherein the fluoropolymer is a spherical particle.

6. The anode plate according to claim 5, wherein a diameter of the spherical particle is 50 nm-500 nm; optionally, the diameter of the spherical particle is 100 nm-200 nm.

7. The anode plate according to any of claims 1 to 6, wherein the carbon nanotube is at least one selected from a single-walled carbon nanotube and a multi-walled carbon nanotube.

8. The anode plate according to any of claims 1 to 7, wherein a diameter of the carbon nanotube is 0.5 nm-20 nm.

9. The anode plate according to any of claims 1 to 8, wherein an aspect ratio of the carbon nanotube is 50-20,000; optionally, the aspect ratio of the carbon nanotube is 60-10,000.

10. The anode plate according to any of claims 1 to 9, wherein in the anode active material layer, a mass percentage of the fluoropolymer is 0.01%-10%; optionally, the mass percentage of the fluoropolymer is 0.1%-5%.

11. The anode plate according to any of claims 1 to 10, wherein in the anode active material layer, a mass percentage of the carbon nanotube is 0.01%-5%; optionally, the mass percentage of the carbon nanotube is 0.2%-2%.

12. The anode plate according to any of claims 1 to 11, wherein a mass percentage of the anode active material in the anode active material layer is 86%-97%.

13. The anode plate according to any of claims 1 to 12, wherein the anode active material layer further comprises a conductive agent;
optionally, in the anode active material layer, a mass percentage of the conductive agent is no more than 3%.

14. The anode plate according to any of claims 1 to 13, wherein the anode active material layer further comprises a binder;
optionally, in the anode active material layer, a mass percentage of the binder is 0.5%-3%.

15. A preparation method for an anode plate, comprising the steps of:
preparing an anode slurry, which contains a fluoropolymer and a carbon nanotube; and
coating the anode slurry on at least one surface of a current collector, drying, and cold pressing to obtain an anode plate;
wherein the anode plate comprises a current collector and an anode active material layer disposed on at least one surface of the current collector; the anode active material layer comprises a fluoropolymer and a carbon nanotube; the fluoropolymer is dispersed in the anode active material layer; and the carbon nanotube is wrapped around the fluoropolymer and an anode active material in the anode active material layer.

16. The preparation method for an anode plate according to claim 15, wherein the fluoropolymer is prepared by emulsion polymerization.

17. The preparation method for an anode plate according to claim 15 or 16, wherein the fluoropolymer is an aqueous emulsion.

18. The preparation method for an anode plate according to any of claims 15 to 17, wherein the fluoropolymer comprises at least one of a homopolymer of a monomer represented by Formula I and a copolymer of a monomer represented by Formula I and a monomer represented by Formula II: 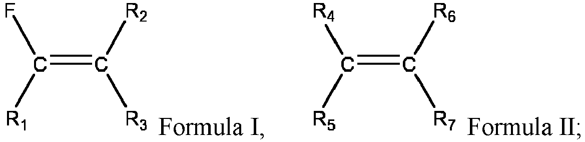
wherein R₁ to R₇ are each independently selected from -H, -F, -Cl, -COOH, -COOR, -CHO, -COR, -CONH₂, -CONHR, -CN, -CCl₃, -CF₃, -NO₂, -OH, -OR, -R and -ROR; optionally, R₁ to R₇ are each independently selected from -H, -F, -Cl, -COOH and -COOR; and
R is selected from C₁ -C₁₈ straight chain or branched chain alkyl; optionally, R is selected from C₁ -C₁₅ straight chain or branched chain alkyl; optionally, R is selected from C₁₋C₁₀ straight chain or branched chain alkyl.

19. The preparation method for an anode plate according to any of claims 15 to 18, wherein the fluoropolymer is at least one selected from polyvinylidene fluoride, polytetrafluoroethylene, hexafluoropropylene, a vinylidene fluoride-tetrafluoroethylene copolymer, a vinylidene fluoride-hexafluoropropylene copolymer, a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluoroacrylate resin;
optionally, the fluoropolymer is at least one selected from polyvinylidene fluoride, polyvinylidene fluoride, a vinylidene fluoride-tetrafluoroethylene copolymer, a vinylidene fluoride-hexafluoropropylene copolymer and a vinylidene fluoride-hexafluoropropylene-tetrafluoroethylene terpolymer.

20. The preparation method for an anode plate according to any of claims 15 to 19, wherein a relative molecular mass of the fluoropolymer is 0.1 million-3 million; optionally, the relative molecular mass of the fluoropolymer is 0.2 million-2 million.

21. The preparation method for an anode plate according to any of claims 17 to 20, wherein the fluoropolymer is a spherical particle.

22. The preparation method for an anode plate according to claim 21, wherein a diameter of the spherical particle is 50 nm-500 nm; optionally, the diameter of the spherical particle is 100 nm-200 nm.

23. The preparation method for an anode plate according to any of claims 15 to 22, wherein the carbon nanotube is at least one selected from a single-walled carbon nanotube and a multi-walled carbon nanotube.

24. The preparation method for an anode plate according to any of claims 15 to 23, wherein a diameter of the carbon nanotube is 0.5 nm-20 nm.

25. The preparation method for an anode plate according to any of claims 15 to 24, wherein an aspect ratio of the carbon nanotube is 50-20,000; optionally, the aspect ratio of the carbon nanotube is 60-10,000.

26. The preparation method for an anode plate according to any of claims 15 to 25, wherein in the anode active material layer, a mass percentage of the fluoropolymer is 0.01%-10%; optionally, the mass percentage of the fluoropolymer is 0.1%-5%.

27. The preparation method for an anode plate according to any of claims 15 to 26, wherein in the anode active material layer, a mass percentage of the carbon nanotube is 0.01%-5%; optionally, the mass percentage of the carbon nanotube is 0.2%-2%.

28. The preparation method for an anode plate according to any of claims 15 to 27, wherein a mass percentage of the anode active material in the anode active material layer is 86%-97%.

29. The preparation method for an anode plate according to any of claims 15 to 28, wherein the anode active material layer further comprises a conductive agent;
optionally, in the anode active material layer, a mass percentage of the conductive agent is no more than 3%.

30. The preparation method for an anode plate according to any of claims 15 to 29, wherein the anode active material layer further comprises a binder;
optionally, in the anode active material layer, a mass percentage of the binder is 0.5%-3%.

31. A secondary battery, comprising the anode plate according to any of claims 1 to 14, or an anode plate prepared by the preparation method for an anode plate according to any of claims 15 to 30.

32. A battery module, comprising the secondary battery according to claim 31.

33. A battery pack, comprising at least one of the secondary battery according to claim 31, or the battery module according to claim 32.

34. An electric device, comprising at least one selected from the secondary battery according to claim 31, the battery module according to claim 32, or the battery pack according to claim 33.
